# EUROPÄISCHE PATENTANMELDUNG

(11) **EP 2 654 161 A2**
(43) Veröffentlichungstag der Anmeldung: **23.10.2013**
(21) Anmeldenummer: 13160976.0
(22) Anmeldetag: 26.03.2013
(51) Int. Cl.: H02J 3/06, H02J 3/38

(54) **An ein elektrisches Hauptnetz anschließbares elektrisches Unternetzwerk**

(30) Priorität: 20.04.2012 DE 102012206584
(71) Anmelder: Solutronic AG, 73257 Köngen (DE)
(72) Erfinder: Scobel-Freimüller, Uwe, 73257 Köngen (DE)
(74) Vertreter: BRP Renaud & Partner

(57) **Zusammenfassung**

Ein (privates) Unternetzwerk, welches an ein Hauptnetzwerk (öffentliches Elektrizitätsnetzwerk) anschließbar ist und bezüglich ihrer Leistungen steuerbare Elektrizitätserzeuger zur Versorgung von Verbrauchern des Unternetzwerks bzw. zur Einspeisung elektrischer Leistung in das Hauptnetzwerk aufweist, ist mit einer Messanordnung kombiniert, welche die in das Hauptnetzwerk eingespeiste elektrische Leistung erfasst und mit der Eingangsseite einer Regelanordnung verbunden ist, die die Leistung der Elektrizitätserzeuger entsprechend einer maximal erlaubten Einspeiseleistung begrenzt.

## Beschreibung

Die Erfindung bezieht sich auf ein an ein elektrisches Hauptnetz, insbesondere ein öffentliches Elektrizitätsnetz, anschließbares elektrisches Unternetzwerk, insbesondere privates Netzwerk, mit bezüglich ihrer elektrischen Leistung steuerbaren Elektrizitätserzeugern zur Versorgung von elektrischen Verbrauchern des Unternetzwerkes mit elektrischer Leistung und/oder zur Einspeisung von elektrischer Leistung in das Hauptnetz.

Derartige Unternetzwerke sind prinzipiell bekannt, beispielsweise in Form von privaten Photovoltaikanlagen, mit denen die Strahlungsenergie der Sonne in elektrische Ströme umgesetzt werden kann, um auf diese Weise elektrische Leistung in das öffentliche Elektrizitätsnetz einzuspeisen.

Allerdings bestehen in diesem Zusammenhang große Probleme hinsichtlich der Leistungsfähigkeit der öffentlichen Elektrizitätsnetze. Denn prinzipiell muss die in ein Netzwerk eingespeiste elektrische Leistung dem jeweiligen Bedarf der angeschlossenen Verbraucher entsprechen. In diesem Zusammenhang können sowohl Einspeisungen, die den Bedarf der Verbraucher deutlich übersteigen, als auch zu geringe Einspeisungen, die geringer sind als der Leistungsbedarf der angeschlossenen Verbraucher, zu Netzzusammenbrüchen führen.

Bei Photovoltaikanlagen kommt hinzu, dass bei vorübergehenden Abschattungen der Sonne durch Bewölkung sowie bei Sonnenaufgang und Sonnenuntergang erhebliche Änderungen bei der in das Netz eingespeisten elektrischen Leistung auftreten. Bei schwachen, unflexiblen Elektrizitätsnetzen kann damit die wünschenswerte Sicherheit der allgemeinen Elektrizitätsversorgung nicht mehr gewährleistet werden. Deshalb ist es in Staaten mit prekären Elektrizitätsnetzen regelmäßig nicht erlaubt, photovoltaisch erzeugten Strom in das öffentliche Netz einzuspeisen. Da derartige Staaten oftmals in sonnenreichen Zonen gelegen sind, muss auf diese Weise in Kauf genommen werden, dass die Möglichkeiten einer solaren Stromerzeugung weitestgehend ungenutzt bleiben.

Hier setzt die Erfindung an, wobei es Aufgabe der Erfindung ist, eine umfangreiche Nutzung von Photovoltaikanlagen auch bei wenig belastbaren bzw. wenig flexiblen Elektrizitätsnetzen zu ermöglichen.

Hierzu ist erfindungsgemäß die Aus- oder Nachrüstung des Unternetzwerkes mit einer Messanordnung vorgesehen, die zumindest in des Hauptnetz eingespeiste elektrische Leistungen erfasst und mit der Eingangsseite einer Regelanordnung verbunden ist, die die Leistung der Elektrizitätserzeuger des Unternetzwerkes entsprechend einer für das Unternetzwerk erlauben maximalen Einspeiseleistung begrenzt.

Die Erfindung beruht auf dem allgemeinen Gedanken, eine Selbstversorgung der Verbraucher des Unternetzwerkes durch dessen Elektrizitätserzeuger jederzeit zuzulassen und lediglich die Einspeisung eines eventuellen Überschusses elektrischer Leistung in das Hauptnetzwerk zu begrenzen.

In diesem Zusammenhang kann die vom Regler zugelassene maximale Einspeiseleistung auch negative Werte aufweisen, das heißt der Regler begrenzt die Leistung der Elektrizitätserzeuger des Unternetzwerkes derart, dass das Unternetzwerke vom Hauptnetzwerk eine vorgebbare Leistung aufnimmt.

Die Erfindung nutzt die Erkenntnis, dass die von Photovoltaikanlagen abrufbare elektrische Leistung über eine Verschiebung des Arbeitspunktes der jeweiligen Anlage auf deren Strom-Spannungs-Kennlinie leicht einstellbar ist. Bislang wird diese Einstellbarkeit allerdings überwiegend nur zur Maximierung der abgegebenen elektrischen Leistung genutzt.

In dem nun bei der Erfindung die Möglichkeiten der Regelung der Leistung von Photovoltaikanlagen auch zur Begrenzung der in das öffentliche Netz eingespeisten Leistung genutzt werden, wird der Einsatzbereich von Photovoltaikanlagen wesentlich erweitert, weil die Aufnahmefähigkeit bzw. geringe Flexibilität eines jeweils vorhandenen öffentlichen Elektrizitätsnetzwerkes ohne weiteres berücksichtigt werden kann.

Bei der Erfindung ist vorteilhaft, dass der jeweilige Elektrizitätsverbrauch oder - bedarf der gegebenenfalls vorhandenen Elektrizitätsverbraucher des Unternetzwerkes nicht erfasst werden muss, denn in jedem Fall kann durch Soll-IstwertVergleich bei der in das öffentliche Netz eingespeisten elektrischen Leistung die Leistungsabgabe der Photovoltaikanlagen auf einen bezüglich der Einspeiseleistung in das öffentliche Netz tolerierbaren Wert begrenzt werden.

Gleichwohl kann die erfindungsgemäß vorgesehene Mess- und Regelanordnung mit einer Steuerung kombiniert sein, die bei hoher Leistungsfähigkeit der Elektrizitätserzeuger des Unternetzwerkes dessen Elektrizitätsverbraucher, beispielsweise Warmwasseranlagen, Schwimmbadheizungen oder dergleichen, einzuschalten gestattet.

Im Übrigen wird hinsichtlich bevorzugter Merkmale der Erfindung auf die Ansprüche sowie die nachfolgende Erläuterung der Zeichnung verwiesen, anhand der eine bevorzugte Ausführungsform der Erfindung näher beschrieben wird. Schutz wird nicht nur für angegebene oder dargestellte Merkmalskombinationen sondern auch für prinzipiell beliebige Kombination der angegebenen oder dargestellten Einzelmerkmale beansprucht.

In der Zeichnung zeigt
- Fig. 1: eine schematisierte Strom-Spannungs-Kennlinie einer Photovoltaikanlage,
- Fig. 2: ein schematisiertes Blockschaltbild eines erfindungsgemäßen Unternetzwerkes.

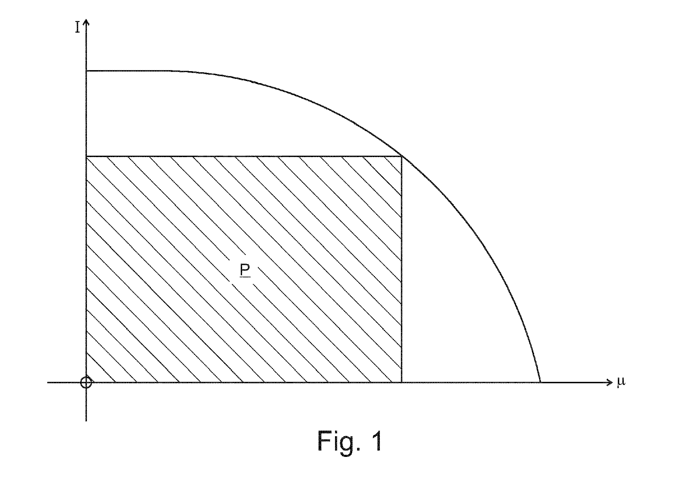

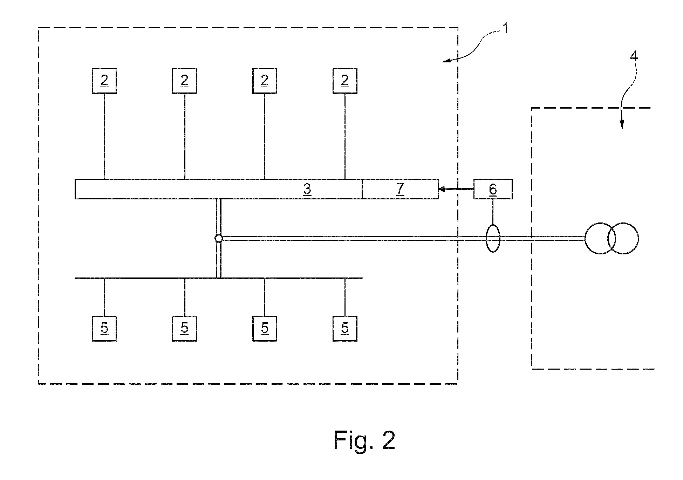

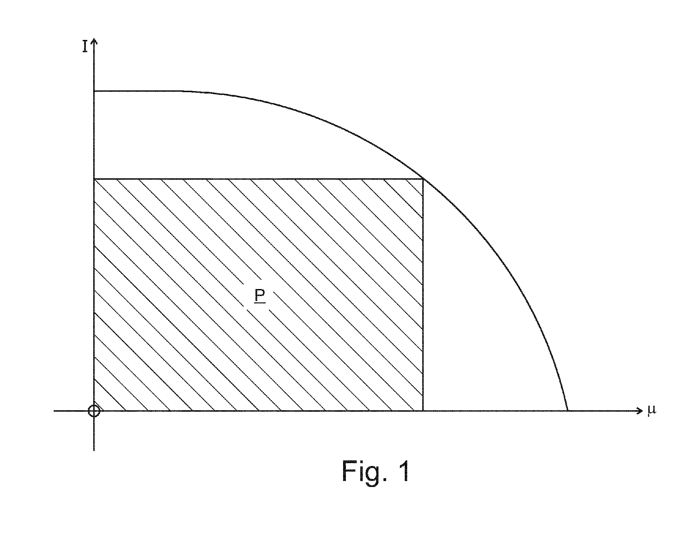

Fig. 1 zeigt nun ein Strom-Spannungs-Diagramm einer Photovoltaikanlage. Wie es für Halbleiteranordnungen typisch ist, sinkt die Stromstärke I bei zunehmender Spannung V ab. Somit kann die durch das Produkt von I und U bestimmte Leistung P durch Wahl des Arbeitspunktes auf der Kennlinie bestimmt werden. Hiervon wird bei der nachfolgend anhand der Fig. 2 erläuterten Steuerung und Regelung eines erfindungsgemäßen Unternetzwerkes Gebrauch gemacht.

Gemäß Fig. 2 besitzt das Unternetzwerk 1 ein oder mehrere Photovoltaikgeneratoren 2, die mit der Gleichstromseite einer Wechselrichteranordnung 3 verbunden sind. Wechselstromseitig ist die Wechselrichteranordnung 3 einerseits mit einem Hauptnetz 4, beispielsweise einem öffentlichen Elektrizitätsnetz, und andererseits mit Verbrauchern 5 des Unternetzwerkes 1 verbunden. An der Schnittstelle zwischen Unternetzwerk 1 und Hauptnetzwerk 4 ist eine Messanordnung 6 vorgesehen, die die vom Unternetzwerk 1 in das Hauptnetzwerk 4 eingespeiste Leistung erfasst. Hier sei angemerkt, dass diese Einspeiseleistung einen negativen Wert hat, wenn das Unternetzwerk 1 Leistung aus dem Hauptnetz 4 aufnimmt.

Für die nachfolgende Betrachtung sei zunächst davon ausgegangen, dass das Hauptnetz 4 keinerlei Einspeisung elektrischer Leistung vom Unternetzwerk 1 zulässt. Dies ist gleichbedeutend damit, dass das Maß der in das Hauptnetz 4 eingespeisten elektrischen Leistung maximal den Wert 0 hat. Die Messanordnung 6 ist ausgangsseitig mit einer Regelanordnung 7 der Wechselrichtungsanordnung verbunden. Diese Regelanordnung 7 vergleicht den von der Messanordnung 6 erfassten Wert der in das Hauptnetz 4 eingespeisten elektrischen Leistung mit einem über eine Eingabe oder eine Signalleitung (nicht dargestellt) vorgegebenen Sollwertbereich und steuert in Abhängigkeit von diesem Soll-IstwertVergleich den Arbeitspunkt bzw. die Arbeitspunkte der gleichstromseitig angeschlossenen Photovoltaikgeneratoren, derart, dass die in das Hauptnetz 4 eingespeiste elektrische Leistung unter dem zulässigen Maximalwert bleibt.

Solange diese Bedingung erfüllt ist, kann die Regelanordnung 7 prinzipiell beliebige Arbeitspunkte für die Photovoltaikgeneratoren 2 vorgeben bzw. zulassen.

Damit kann gewährleistet werden, dass die Photovoltaikgeneratoren 2 immer eine dem Bedarf der Verbraucher 5 des Unternetzwerkes optimal angepasste Leistung liefern. Erst wenn diese Leistung den Bedarf der Verbraucher 5 überschreitet und damit bewirkt, dass eine gegebenenfalls unzulässige Leistung in das Hauptnetzwerk 4 eingespeist würde, wird die Leistung der Photovoltaikgeneratoren 2 herabgeregelt, so dass die zulässige Einspeiseleistung nicht überschritten werden kann.

Über die Begrenzung der Einspeiseleistung ist es also nicht notwendig, den aktuellen Leistungsbedarf der Verbraucher 5 zu erfassen. Gleichwohl kann eine solche Erfassung vorgenommen werden. Im Übrigen kann vorgesehen sein, dass die Regelanordnung bei Gefahr einer Überschreitung der zulässigen Einspeiseleistung zusätzliche Verbraucher 5 (soweit vorhanden) des Unternetzwerkes 1 einschaltet, um die mögliche Einspeiseleistung entsprechend schnell zu vermindern.

Aus den obigen Erläuterungen wird deutlich, dass vorhandene Unternetzwerke 1 mit vergleichsweise geringem Aufwand entsprechend der Erfindung nachgerüstet werden können. Im Wesentlichen muss nur dafür gesorgt werden, dass den Photovoltaikgeneratoren 2 eine Wechselrichteranordnung 3 mit Regelanordnung 7 zugeordnet wird, die die Wechselrichteranordnung 3 derart zu steuern vermag, dass die Leistung der Photovoltaikgeneratoren 2 entsprechend der maximalen Einspeiseleistung begrenzt wird. Soweit die jeweils vorhandene Wechselrichteranordnung 3 und die zugeordnete Regelanordnung 7 bereits entsprechende Möglichkeiten bieten und nicht nur dafür geeignet sind, die Photovoltaikgeneratoren 2 auf maximale Leistung einzuregeln, wird lediglich die Nachrüstung einer Messanordnung 6 erforderlich, mit der die Regelanordnung 7 den jeweiligen Ist-Zustand der Einspeisung erfassen kann. Im Ergebnis muss also lediglich die Schnittstelle zwischen Unternetzwerke 1 und Hauptnetzwerk 4 auf- bzw. umgerüstet werden.

## Patentansprüche

1. An ein Hauptnetzwerk (4), insbesondere ein öffentliches Elektrizitätsnetzwerk, anschließbares elektrisches Unternetzwerk (1) mit bezüglich ihrer Leistungen steuerbaren Elektrizitätserzeugern (2) zur Versorgung von Verbrauchern (5) des Unternetzwerkes (1) mit elektrischer Leistung und/oder zur Einspeisung von elektrischer Leistung in das Hauptnetzwerk (4),
wobei
eine Messanordnung (6), welche zumindest die in das Hauptnetzwerk (4) eingespeiste elektrische Leistung erfasst, mit der Eingangsseite einer Regelanordnung (7) verbunden ist, die die Leistung der Erzeuger (2) entsprechend einer maximal erlaubten Einspeiseleistung begrenzt.

2. Unternetzwerk nach Anspruch 1,
**dadurch gekennzeichnet,**
**dass** die Regelanordnung (7) die Leistung der Erzeuger (2) auf ein Maß begrenzt, bei dem das Unternetzwerk (1) noch elektrische Leistung aus dem Hauptnetz (4) aufnimmt.

3. Unternetzwerk nach Anspruch 1 oder 2,
**dadurch gekennzeichnet,**
**dass** als Erzeuger Photovoltaikgeneratoren (2) vorgesehen sind und die Regelanordnung (7) direkt oder indirekt den Arbeitspunkt (Spannung, Stromstärke) der Photovoltaikgeneratoren (2) verändert.

4. Unternetzwerk nach einem der Ansprüche 1 bis 3,
**dadurch gekennzeichnet,**
**dass** die Regelanordnung eine Einspeisung von elektrischer Leistung aus dem Unternetzwerk (1) in das Hauptnetzwerk (4) verhindert, jedoch eine Aufnahme elektrischer Leistung aus dem Hauptnetzwerk (4) zulässt.
